(19) **Europäisches Patentamt / European Patent Office / Office européen des brevets**

(11) **EP 2 135 461 B1**

(12) **EUROPEAN PATENT SPECIFICATION**

(45) Date of publication and mention
of the grant of the patent:
**08.02.2012 Bulletin 2012/06**

(21) Application number: **08727234.0**

(22) Date of filing: **31.03.2008**

(51) Int Cl.:
*H04N 9/64* (2006.01)

(86) International application number:
**PCT/US2008/004198**

(87) International publication number:
**WO 2008/127548 (23.10.2008 Gazette 2008/43)**

(54) **INPUT-SIGNAL TRANSFORMATION FOR RGBW DISPLAYS**

EINGANGSSIGNAL-UMWANDLUNG FÜR RGBW-ANZEIGEN

TRANSFORMATION DE SIGNAUX D'ENTRÉE POUR AFFICHAGES RGBW

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **13.04.2007 US 734899**

(43) Date of publication of application:
**23.12.2009 Bulletin 2009/52**

(73) Proprietor: **Global OLED Technology LLC
Herndon, VA 20171 (US)**

(72) Inventors:
• **HAMER, John William
Rochester, New York 14626 (US)**
• **WHITE, Christopher J.
Rochester, New York 14650-2201 (US)**

• **ALESSI, Paula Jane
Rochester, New York 14612 (US)**
• **LUDWICKI, John Edward
Churchville, New York 14428 (US)**
• **MILLER, Michael Eugene
Honeoye Falls, New York 14472 (US)**

(74) Representative: **Wibbelmann, Jobst et al
Wuesthoff & Wuesthoff
Patent- und Rechtsanwälte
Schweigerstrasse 2
81541 München (DE)**

(56) References cited:
**US-A1- 2002 122 160     US-A1- 2004 263 528
US-A1- 2005 083 341     US-A1- 2006 262 053**

Description

FIELD OF THE INVENTION

The present invention relates to additive color RGBW displays, and in a particular embodiment specifically to RGBW OLED displays.

BACKGROUND OF THE INVENTION

Additive color digital image display devices are well known and are based upon a variety of technologies such as cathode ray tubes, liquid crystal modulators, and solid-state light emitters such as Organic Light Emitting Diodes (OLEDs). In a common additive color display device, a pixel includes red, green, and blue colored subpixels. These subpixels correspond to color primaries that define a color gamut. By additively combining the illumination from each of these three subpixels, i.e. with the integrative capabilities of the human visual system, a wide variety of colors can be achieved. In one technology, OLEDs can be used to generate color directly using organic materials that are doped to emit energy in desired portions of the electromagnetic spectrum, or alternatively, broadband emitting (apparently white) OLEDs can be attenuated with color filters to achieve red, green and blue.

It is possible to employ a white, or nearly white, subpixel along with the red, green, and blue subpixels to improve power efficiency and/or luminance stability over time. Other possibilities for improving power efficiency and/or luminance stability include the use of one or more additional non-white subpixels. However, images and other data destined for display on a color display device are typically stored and/or transmitted in three channels, that is, having three signals corresponding to a standard (e.g. sRGB) or specific (e.g. measured CRT phosphors) set of primaries. Therefore incoming image data will have to be converted for use on a display having four subpixels per pixel rather than the three subpixels used in a three channel display device.

In the field of CMYK printing, conversions known as undercolor removal or gray component replacement are made from RGB to CMYK, or more specifically from CMY to CMYK. At their most basic, these conversions subtract some fraction of the CMY values and add that amount to the K value. These methods are complicated by image structure limitations because they typically involve non-continuous tone systems, but because the white of a subtractive CMYK image is determined by the substrate on which it is printed, these methods remain relatively simple with respect to color processing. Attempting to apply analogous algorithms in continuous tone additive color systems would cause color errors if the additional primary is different in color from the display system white point.

In the field of sequential-field color projection systems, it is known to use a white primary in combination with red, green, and blue primaries. White is projected to augment the brightness provided by the red, green, and blue primaries, inherently reducing the color saturation of some, if not all, of the colors being projected. A method proposed by Morgan et al. in US 6,453,067 teaches an approach to calculating the intensity of the white primary dependent on the minimum of the red, green, and blue intensities, and subsequently calculating modified red, green, and blue intensities via scaling. The scaling is ostensibly to try to correct the color errors resulting from the brightness addition provided by the white, but simple correction by scaling will never restore, for all colors, all of the color saturation lost in the addition of white. The lack of a subtraction step in this method ensures color errors in at least some colors. Additionally, Morgan's disclosure describes a problem that arises if the white primary is different in color from the desired white point of a display device, but does not adequately solve the problem. The method simply accepts an average effective white point, which effectively limits the choice of white primary color to a narrow range around the white point of the device.

A similar approach is described by Lee et al. ("TFT-LCD with RGBW Color System", SID 03 Digest, pp. 1212-1215) to drive a color liquid crystal display having red, green, blue, and white pixels. Lee et al. calculate the white signal as the minimum of the red, green, and blue signals, then scale the red, green, and blue signals to correct some, but not all, color errors, with the goal of luminance enhancement paramount. The method of Lee et al. suffers from a similar color inaccuracy to that of Morgan.

In the field of ferroelectric liquid crystal displays, another method is presented by Tanioka in US 5,929,843. Tanioka's method follows an algorithm analogous to the familiar CMYK approach, assigning the minimum of the R,G, and B signals to the W signal and subtracting the same from each of the R, G, and B signals. To avoid spatial artifacts, the method teaches a variable scale factor applied to the minimum signal that results in smoother colors at low luminance levels. Because of its similarity to the CMYK algorithm, it suffers from the same problem cited above, namely that a white pixel having a color different from that of the display white point will cause color errors.

Primerano et al., in US 6,885,380, and Murdoch et al., in US 6,897,876, describe methods for transforming three color-input signals (R,G,B) into four color-output signals (R,G,B,W) which do not cause color errors when the white pixel has a color different from that of the display white point. However, these methods assume that the color of the emitters, and in particular the color of the W emitter (white, in these cases) is constant. As described by Lee et al. in US 2006/0262053, the color of a white-emitting OLED can change with the controlling voltage. In other words, the color of a white-emitting OLED can vary with the intensity of emission. While a number of other methods have addressed the problem of transforming three color-input signals to four color-output signals, e.g. Morgan et al. in US 6,453,067, Choi et al. in US 2004/0222999, Inoue et al. in US 2005/0285828, van Mourik et al. in WO 2006/077554, Chang et al. in US 2006/0187155, and Baek in US 2006/0256054, these methods cannot adjust for a white emitter with variable color. While Lee's method can adjust for a white emitter with variable color, it requires a set of six coefficients to apply a correction after the conversion from three color signals to four color signals. This method is computationally and memory intensive, and would be slow and difficult to implement in a large display. Gathering data for the method requires manual adjustments that can be time-consuming and labor-intensive. It requires gathering spectral data, which is more complex and time-consuming than calorimetric measurements. Further, it does not mathematically guarantee a calorimetric match between a desired RGB color and the RGBW equivalent.

There is a need, therefore, for an improved method for transforming three color-input signals, bearing images or other data, to four or more output signals when the color of an emitter can change with intensity.

## SUMMARY OF THE INVENTION

Some or all of the above problems are overcome by a method for transforming three color-input signals (R, G, B) having the features of claim 1.

In accordance with one embodiment, the invention is directed towards a method for transforming three color-input signals (R, G, B) corresponding to three gamut-defining color primaries of a display to four color-output signals (R', G', B', W) corresponding to the gamut-defining color primaries and one additional primary of the display, where the additional primary has color that varies with drive level, comprising:

> a) determining a relationship between drive level of the additional primary and intensities of the three gamut-defining primaries which together produce equivalent color over a range of drive levels for the additional primary; and
> b) employing the three color-input signals R, G, B and the relationship defined in a) to determine a value for W of the four color-output signals, and modification values to be applied to one or more of the R, G, B components of the three color-input signals to form the R', G', B' values of the four color-output signals.

### Advantages

It is an advantage of this invention that it can transform three color-input signals to four color-output signals, even in the case that the fourth signal represents a within-gamut emitter whose color varies with intensity. It is a further advantage of this invention that it is based on first principles of color science and so does not require an adjustment step to the resulting signals. It is a further advantage of this invention that the data collection uses simple measurements, requires little memory, is fast, and can be fully automated. It is a further advantage of this invention that it gives excellent colorimetric matching between RGB and equivalent RGBW colors.

## BRIEF DESCRIPTION OF THE DRAWINGS

> FIG. 1 is a plan view of one embodiment of an OLED device that can be used in the method of this invention;
> FIG. 2 shows a 1931 CIE chromaticity diagram showing the emission result for an additional primary that has color that varies with drive level;
> FIG. 3 is a graph showing the relationship between the drive level of an additional primary of a display and the intensities of three gamut-defining primaries of the display;
> FIG. 4 is a graph of the relationship of FIG. 3 showing how the three color-input signals and the relationship can be employed in determining values of four color-output signals from three color-input signals according to the method of this invention;
> FIG. 5 is a graph showing a relationship between the intensity of the three gamut-defining primaries and their respective drive levels;
> FIG. 6 shows a block diagram of the steps in one embodiment of this method and the results of those steps; and
> FIG. 7A and 7B are CIELAB representations of the results of the method of this invention compared to a prior art method.

## DETAILED DESCRIPTION OF THE INVENTION

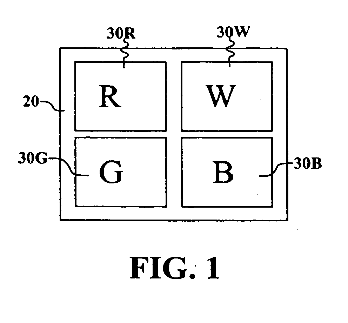

Turning now to FIG. 1, there is shown a plan view of one embodiment of an additive display device such as an OLED device that can be used in the method of this invention. Note that this method is described primarily in connection with an OLED display embodiment, but the invention is also applicable to other additive display devices such as LCDs and sequential-field color projection systems. The display includes one or more pixels 20, each of which comprises at least four light-emitting elements, which correspond to an equivalent number of primaries. Three of the primaries are gamut-defining primaries, that is, the light-emitting elements emit light that determines the range of colors that the display can produce, and are commonly red (R) primary **30R,** green (G) primary **30G,** and blue (B) primary **30B.** The additional W primary **30W** has color that varies with drive level, and therefore with intensity. In OLED systems, this color variation with drive level occurs commonly in broadband-light-emitting elements, that is, elements that emit more than a single color and are within the color gamut. It is most commonly a problem in white emitters, but this invention is not limited to that case. In patterned OLED emitters, wherein the gamut-defining elements produce a narrow range of wavelengths (e.g. red primary **30R** produces only light of wavelengths longer than 600nm), color change with intensity is generally not a problem. In filtered OLED emitters (e.g. wherein red primary **30R** internally produces broadband light, such as white light, but a color filter limits external emission to red light), careful selection of the filter can eliminate much of the color variation a broadband emitter can produce. Thus, color variation is primarily a problem in an unfiltered broadband emitter, e.g. additional primary **30W.**

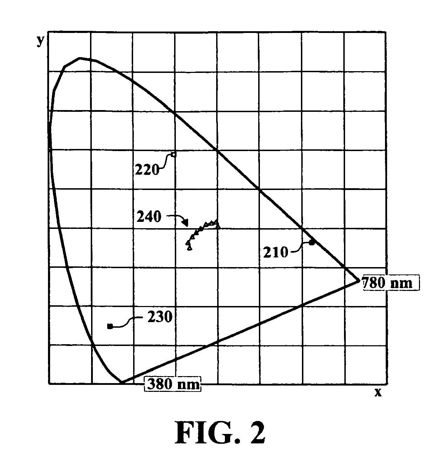

Turning now to FIG. 2, there is shown a 1931 CIE chromaticity diagram showing the emission result for four emitters. These emitters include three gamut-defining primaries (red primary **210,** green primary **220,** and blue primary **230**), and an additional primary (**W**, **240**) that has color that varies with drive level, and therefore with intensity, and that is within the gamut defined by the red, green, and blue primaries. As shown, a series of readings for the W primary was done at a series of drive levels. For each drive level, the chromaticity (x,y) and luminance (Y) is measured using a colorimeter. These values can be transformed to XYZ tristimulus values according to calculations outlined in "Colorimetry", CIE Publication 15:2004 3$^{rd}$ edition published by the CIE Central Bureau in Vienna, Austria. The XYZ tristimulus values can be used in Eq. 1 to generate red, green, and blue intensities ($R_i$, $G_i$, and $B_i$) that produce equivalent color to the additional primary at each drive level:

$$\begin{pmatrix} X_R & X_G & X_B \\ Y_R & Y_G & Y_B \\ Z_R & Z_G & Z_B \end{pmatrix}^{-1} \begin{pmatrix} X \\ Y \\ Z \end{pmatrix} = \begin{pmatrix} R_i \\ G_i \\ B_i \end{pmatrix} \qquad \text{Eq. 1}$$

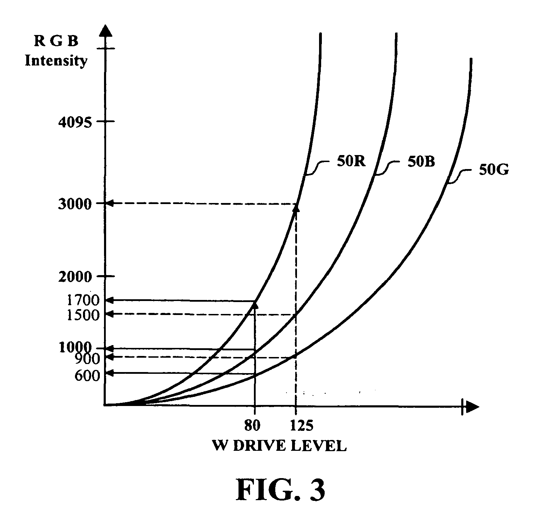

The relationship given in Eq. 1 was derived by W. T. Hartmann and T.E. Madden, "Prediction of display colorimetry from digital video signals", J. Imaging Tech, 13, 103-108, 1987. The 3x3 matrix is known as the inverse primary matrix, where the columns of the matrix $X_R$, $Y_R$, and $Z_R$ are the tristimulus values for the red gamut-defining primary, $X_G$, $Y_G$, and $Z_G$ are the tristimulus values for the green gamut-defining primary and $X_B$, $Y_B$, and $Z_B$ are the tristimulus values for the blue gamut-defining primary. Colorimetric measurements resulting in XYZ tristimulus values of each gamut-defining primary are made, with the remaining two gamut-defining primaries turned off, at the maximum level of that primary that would be required to achieve the display white point with the other gamut-defining primaries. The red, green, and blue intensities calculated using Eq. 1 at each drive level of the W primary can be plotted to determine the relationship between the drive level of the W primary and intensities of the R, G, and B primaries which together produce equivalent color over a range of drive levels for the W primary, as shown in FIG. 3. In addition to methods known in the art, tristimulus measurements for use in the present invention can conveniently be made in accordance with the display calibration method of commonly-assigned, concurrently-filed, co-pending application USSN 11/734,934

Turning now to FIG. 3, there is shown a graph showing the relationship between the drive level of one embodiment of an additional primary of a display and the intensities of three gamut-defining primaries of the display. Such a relationship can be determined using Eq. 1. The horizontal axis represents the drive level of the additional primary, which is a value to control the brightness of the particular primary. The drive level can be e.g. a code value for the display. In this embodiment, the drive level is an 8-bit digital value, but this invention is not limited to 8 bits, or to digital signals. The vertical axis represents intensity of the gamut-defining primaries. In this embodiment, the intensity is a 12-bit value, but this invention is not limited to 12 bits. FIG. 3 is for an additional primary that has color that varies with drive level. For example, at a drive level of 80 for the additional primary, the relative R:G:B intensities producing equivalent color to the additional primary are 1700:600:1000 (8.5:3:5). These ratios are not constant at different drive levels. At a drive level of 125, the corresponding ratio is 3000:900:1500 (10:3:5). Thus, a color-matching algorithm created at a drive level of 80 for the additional primary will not give the correct color at the different drive level of 125 if the algorithm does not account for color variation.

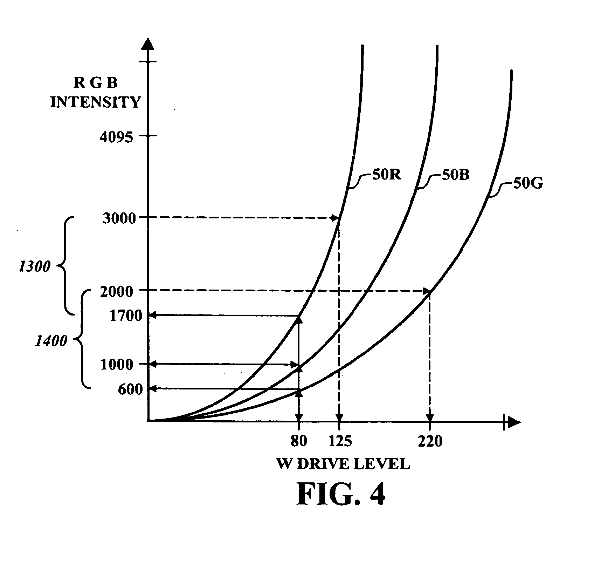

Turning now to FIG. 4, there is shown a graph of the relationship of FIG. 3 showing how the three color-input signals and the relationship can be employed in determining values of four color-output signals from three color-input signals according to the method of this invention. In this example, we start with a desired color specified as three color-input signals representing intensity signals for red, green, and blue, and corresponding to the gamut-defining primaries of the display. If the color-input signals are non-linear with respect to intensity, they can first be converted to a linear signal, for example by a conversion such as sRGB (IEC 61966-2-1:1999, Sec. 5.2). The red signal R has an intensity of 3000, the green signal G has an intensity of 2000, and the blue signal B has an intensity of 1000. The relationship of FIG. 3 can be employed with the three color-input signals to determine values for four color-output signals (R', G', B', W) corresponding to the four primaries (the gamut-defining primaries and the additional primary) of the display. Based on the relationship of FIG. 3, each of the color-input intensities corresponds to a drive level for the W channel. For example, the red intensity of 3000 corresponds to a W-channel drive level of 125. Similarly, the green intensity corresponds to a W-channel drive level of 220, and the blue intensity corresponds to a W-channel drive level of 80. The smallest of the drive levels, 80 in this example, is the maximum value of the W channel that can be used without producing more than desired of any channel and thus being unable to reproduce the desired color, to replace some of the R, G, B intensities. Since the display is additive, any W-channel drive level less than or equal to the smallest drive level (e.g. 80) can be used; any light not provided by the W channel can be made up by the R, G, and/or B channels. Other methods in the art require a gamma correction table for determining the W channel drive level. Such a table is not required in the method described herein.

A drive level of 80 for the W channel produces equivalent color to a red intensity of 1700, a green intensity of 600, and a blue intensity of 1000, which are termed modification values. After the modification values are determined, they can be applied to the R, G, B components of the color-input signals, in this case by subtraction, to form the R', G', B' values of the four color-output signals, which in this case are 1300, 1400, and 0 for red, green, and blue, respectively. Thus, given three color-input signals (R, G, B) of 3000, 2000, and 1000 in intensity space, one determines four color-output signals (R', G' B', W) of 1300, 1400, 0, and 80, where the W signal is a display drive level and the other signals are in intensity space. One can drive the display with the four color-output signals, or with transformed values as will be described below.

Choosing the smallest of the three W-channel drive levels as the drive level of the W channel is sufficient when curves **50R, 50G,** and **50B** are monotonically increasing. When those three curves are not monotonically increasing, the maximum W drive level may be less than the minimum of the three drive levels, since in that case there is no guarantee that a lower drive level will correspond to a lower intensity. This method can still be used, but the W drive level must be reduced so that the modification values are all less than the corresponding R, G, B color input signals.

The relationship between the drive level of the additional primary (W) and the intensities of the three gamut-defining primaries (R, G, B) shown in FIG. 3 can be defined in a look-up table in a display. For a reverse look-up table (e.g. a 12-bit intensity to an 8-bit drive level), one can save space by including a subset of all possible values in the look-up table. Thus, the look-up table can have every other (or every 4th, 8th...) intensity value. Alternatively, the relationship can be defined by one or more function(s) in the circuitry of the display.

For the additional primary, we can define an additional-primary mixing ratio, which is the relative fraction of the maximum additional-primary intensity that will actually be provided. The additional-primary mixing ratio can be from 0 to 1. In the example of FIG. 4, this ratio is 1, as the algorithm replaces as much as possible of the desired color (3000, 2000, 1000 for R, G, and B, respectively) with the additional primary. In some situations, it can be desirable that the value W of the four color-output signals be determined based on the additional-primary mixing ratio such that the additional primary will provide less than the maximum intensity. For example, to provide an additional-primary mixing ratio of 0.5, one would use the color-input signals multiplied by 0.5 (that is, 1500, 1000, and 500 for R, G, and B) to determine the W channel drive level as described above.

There can be situations wherein it can be desirable to have an additional-primary mixing ratio of less than 1. For example, at colors very near the color of the W emitter, it can be used with little or no light emission from the R, G, and B emitters. While this can provide significant power savings, much of the pixel (e.g. primaries **30B, 30G,** and **30R** of pixel **20** of FIG. 1) will be dark, and the viewer may see a highly pixelated display. It can be desirable to provide some R, G, and B emission with less W to maintain the illusion of a continuous display to the viewer.

Another condition wherein an additional-primary mixing ratio of less than 1 can be desirable is at very low intensities. Due to analytical limitations, it may not be possible to accurately measure the tristimulus values of the W emitter at very low drive levels, and thus it may not be possible to accurately calculate the R, G, and B intensities of the W emitter. To prevent inaccurate color rendition at low intensities, it can be useful that this method is employed when displaying colors on the display above a selected threshold intensity of one or more of the three gamut-defining primaries, or having a value W of the four color-output signals above a selected threshold drive level of the additional primary, and that the additional primary not be used below the predetermined threshold intensities or drive level. When displaying any color below one of these thresholds, the original three-color input signals are used instead of the four-color output signals. The predetermined threshold can be selected on the intensity axis or the W drive level axis of FIG. 4, as appropriate for the control logic. The thresholds can vary depending on factors including which axis the threshold applies to, the capability of the measurement instrument and the requirements of the application.

In the case of a predetermined threshold, it can also be appropriate to include a phasing-in of the additional-primary mixing ratio in a region above the predetermined threshold. For example, at a W drive level of 25 or less, the additional-primary mixing ratio can be 0; at a W drive level of 40 or more, the mixing ratio can be 1; and from 25 to 40 the mixing ratio can increase from 0 to 1.

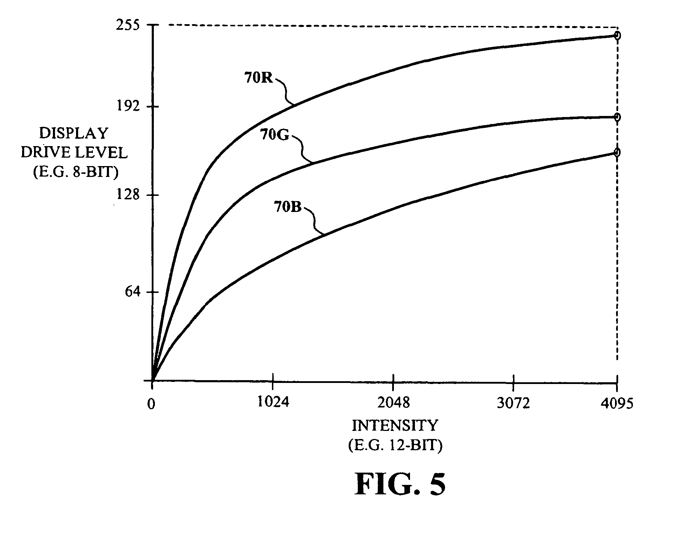

Turning now to FIG. 5, there is shown a relationship between the intensity of the three gamut-defining primaries and their respective drive levels. Through these relationships (e.g. gamma tables or power functions, one each for R, G, and B), the R', G', and B' components of the four color-output signals can be transformed into display drive levels, e.g. code values for each of the gamut-defining primaries, that can be used to drive the display.

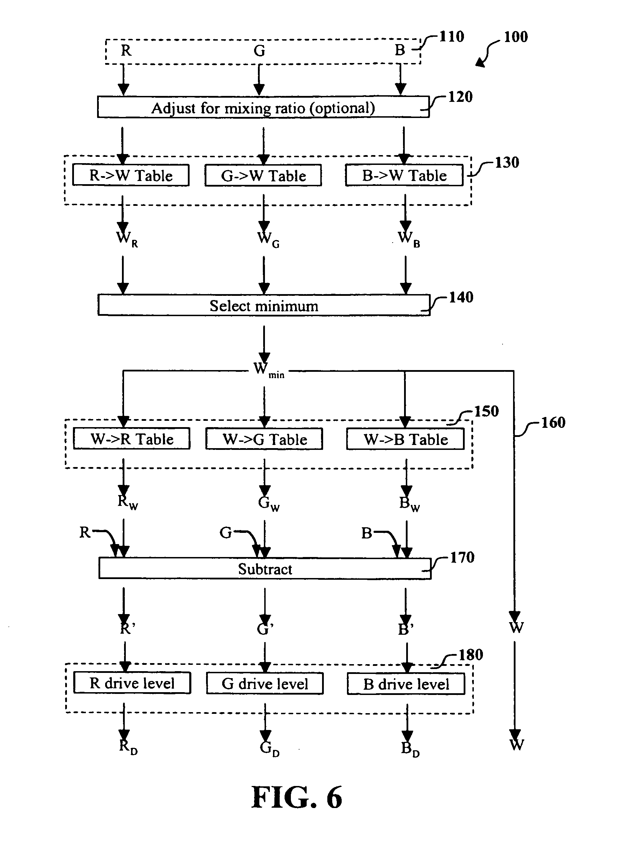

Turning now to FIG. 6, and referring also to FIG. 4 and 5, there is shown a block diagram of the steps, and the results of those steps, in one embodiment of this method for transforming three color-input signals (R, G, B) corresponding to three gamut-defining color primaries of a display to four color-output signals (R', G', B', W) corresponding to the gamut-defining color primaries and one additional primary of the display, where the additional primary has color that varies with drive level. Initially in method **100,** three color-input signals (R, G, B) are received (Step **110**). The color-input signals can optionally be adjusted for additional-primary mixing ratio as described above (Step **120**). Each of the color signals is transformed, via an intensity-to-drive-level lookup table, into a W-channel drive level ($W_R$, $W_G$, $W_B$) that produces an equivalent level of that color (Step **130**). The lowest W-channel drive level of $W_R$, $W_G$, and $W_B$ is selected (Step **140**), thereby providing $W_{Min}$, and this value is transformed, via three drive-level-to-intensity lookup tables, into equivalent intensities or modification values ($R_w$, $G_w$, $B_w$) for the three gamut-defining primaries (Step **150**). $W_{Min}$ also determines the drive level value W of the four color-output signals (Step **160**). The equivalent intensities are subtracted from the corresponding color-input signals (Step **170**) to provide the gamut-defining color-output signals (R', G', B'). The gamut-defining color-output signals can be further transformed into drive levels ($R_D$, $G_D$, $B_D$) for the gamut-defining primaries (Step **180**). The transformed values can be used to drive the display.

The method described herein can be further extended to displays comprising additional color-gamut-defining primaries, for example a display wherein the pixels comprise red, green, blue, white, and yellow emitters. The color-input signals comprise R, G, and B. One would first use the method of this invention to determine R', G', B', and W signals. One can then use the R', G', and B' signals to determine a yellow signal Y and further-adjusted red, green, and blue signals R", G", and B", for example by the method of Murdoch et al. in US 6,897,876.

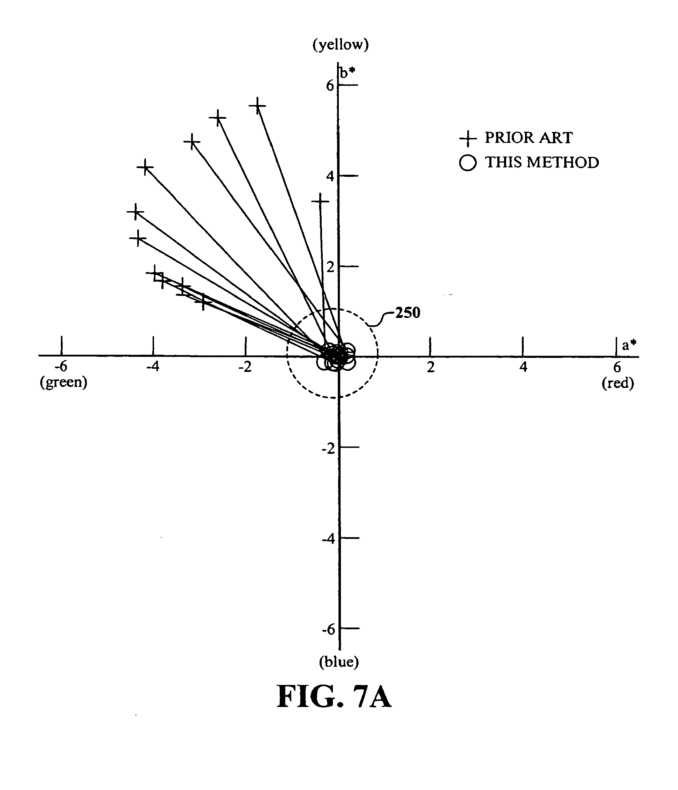

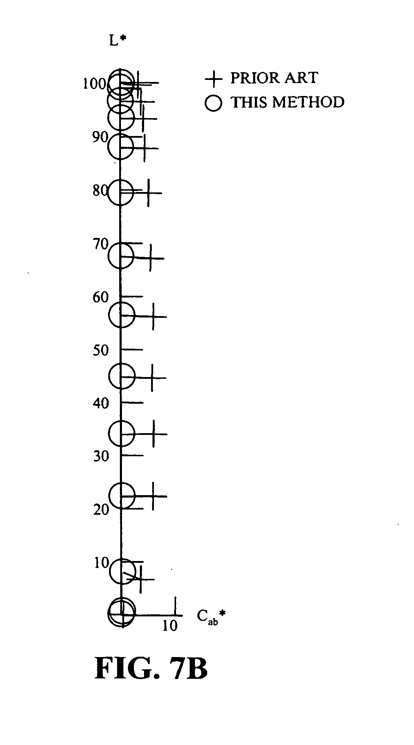

FIG. 7A and 7B are CIELAB representations of the results of the method described herein compared to prior art methods such as the method of Murdoch et al. in US 6,897,876, in accounting for the additional primary shift in color with drive level. Here the additional primary is a white. The XYZ tristimulus value data obtained for the additional primary as a function of drive level after applying both methods is used along with XYZ data for a CIE Standard Illuminant D65 reference white point to compute the CIELAB data according to calculations outlined in "Colorimetry", CIE Publication 15:2004 3rd edition published by the CIE Central Bureau in Vienna, Austria. CIELAB is an approximately uniform color space that was derived to closely approximate visually perceptible color differences. FIG. 7A shows the b* vs. a* results. The + symbols show results from the method of Murdoch et al. that cannot account for the additional primary shifting from green to yellow with drive level. The b* vs. a* values represented by the + symbols correspond to visually perceptible units that are much greater than the just noticeable difference **250** defined for the CIELAB color space. The open circles show results after applying the method described herein, which lead to color positions for the additional primary being well within a 1 unit radius in the a* and b* dimensions for all drive levels, making them all about equally perceptible around the neutral origin (a*=0 and b*=0). Since the CIELAB uniform color space is three-dimensional, it is also important to show the L* (lightness) vs. $C_{ab}^*$ (chroma) results in FIG. 7B. The + symbols show results from the method of Murdoch et al. that feature the additional primary having visually perceptible $C_{ab}^*$ values from 3 to 6 for many drive values from black to white, making the neutral appear very chromatic. The open circles show results after applying the method described herein. These lead to color positions for the additional primary that are visually achromatic or neutral in appearance with $C_{ab}^*$·

**PARTS LIST**

    20      OLED device pixel

    30B     blue primary

    30G     green primary

    30R     red primary

30W     within-gamut primary

50B     blue intensity vs. drive level

50G     green intensity vs. drive level

50R     red intensity vs. drive level

70B     blue gamma curve

70G     green gamma curve

70R     red gamma curve

100     signal-transformation method

110     receive-input step

120     mixing ratio step

130     first lookup step

140     select-minimum step

150     second lookup step

160     W drive level step

170     modification step

180     post-transform step

210     red primary

220     green primary

230     blue primary

240     within-gamut primary

250     just noticeable difference

**Claims**

1. A method for transforming three color-input signals (R, G, B) corresponding to three gamut-defining color primaries of a display to four color-output signals (R', G', B', W) corresponding to the gamut-defining color primaries and one additional primary of the display, where the additional primary has color that varies with drive level, **characterized by** comprising:

    a) receiving three color-input signals (R, G, B);
    b) employing the three color- input signals (R, G, B) and a predetermined relationship (50R, 50G, 50B) between drive level of the additional primary and intensities of the three gamut- defining primaries which together produce equivalent color over a range of drive levels for the additional primary, to determine a value for W of the four color-output signals (R', G', B', W) such that the value for W is the drive level, which corresponds to the smallest intensity of the intensities representing the color- input signals (R, G, B) according to the predetermined relationship (50R, 50G, 50B);
    c) transforming the value for W, via the predetermined relationship (50R, 50G, 50B), into modification values

$(R_w, G_w, B_w)$, which are to be applied to one or more of the color-input signals $(R, G, B)$ by subtracting the modification values $(R_w, G_w, B_w)$ from the three color-input signals $(R, G, B)$ to form the gamut-defining color-output signals $(R', G', B')$ used together with the value for W as the values of the four color-output signals $(R', G', B', W)$.

2. The method of claim 1 wherein the three gamut-defining color primaries are a red primary, a green primary, and a blue primary, and the additional primary has a color within the gamut defined by the red, green, and blue primaries.

3. The method of claim 1 wherein the relationship between drive level of the additional primary and intensities of the three gamut-defining primaries, which together produce equivalent color over a range of drive levels, is defined in a look-up table.

4. The method of claim 1 wherein the relationship between drive level of the additional primary and intensities of the three gamut-defining primaries, which together produce equivalent color over a range of drive levels, is defined by one or more function(s).

5. The method of claim 1 further comprising defining an additional-primary mixing ratio, which is a relative fraction of a maximum additional-primary intensity being provided, and wherein the value W of the four color-output signals is further determined based on the additional-primary mixing ratio.

6. The method of claim 1 further comprising driving the display with the four color-output signals or transformed values thereof, wherein the display comprises light-emitting elements that emit light corresponding to the gamut-defining color primaries and the additional primary.

7. The method of claim 6 wherein the four color-output signals or transformed values thereof are employed to drive the display when displaying colors on the display having a value W of the four-color output signals above a selected threshold drive level of the additional primary, and wherein the three-color input signals or transformed values thereof are employed to drive the display when displaying all other colors on the display, such that the additional primary is not used below the predetermined threshold.

8. The method of claim 7 further comprising defining an additional-primary mixing ratio, which is a relative fraction of a maximum additional-primary intensity being provided, and wherein the value W of the four color-output signals is further determined based on the additional-primary mixing ratio.

9. The method of claim 8 further including a phasing-in of the additional-primary mixing ratio in a region above the predetermined threshold.

10. The method of claim 6 wherein the four color-output signals or transformed values thereof are employed to drive the display when displaying colors on the display above a selected threshold intensity of one or more of the three gamut-defining primaries, and wherein the three-color input signals or transformed values thereof are employed to drive the display when displaying all other colors on the display, such that the additional primary is not used below the predetermined threshold.

11. The method of claim 10 further comprising defining an additional-primary mixing ratio, which is a relative fraction of a maximum additional-primary intensity being provided, and wherein the value W of the four color-output signals is further determined based on the additional-primary mixing ratio.

12. The method of claim 11 further including a phasing-in of the additional-primary mixing ratio in a region above the predetermined threshold.

13. The method of claim 1 wherein the R', G', and B' components of the four color-output signals are transformed to display drive levels.

14. The method of claim 1 wherein each of the three components of the (R,G,B) color-input signals is an intensity.

15. The method of claim 1 wherein a non-linear input signal is converted to a linear signal to produce the (R,G,B) color-input signals.

**Patentansprüche**

1. Verfahren zum Transformieren von drei Farb-Eingangssignalen (R, G, B), die drei Farbraum-definierenden Primärfarben einer Anzeige entsprechen, in vier Farb-Ausgangssignale (R', G', B', W), die den Farbraum-definierenden Primärfarben und einer zusätzlichen Primärfarbe der Anzeige entsprechen, wobei die zusätzliche Primärfarbe eine Farbe aufweist, die mit einem Betriebspegel variiert, **dadurch gekennzeichnet, dass** das Verfahren aufweist:

   a) Empfangen von drei Farb-Eingangssignalen (R, G, B);
   b) Anwenden der drei Farb-Eingangssignale (R, G, B) und eines vorbestimmten Zusammenhangs (50R, 50G, 50B) zwischen dem Betriebspegel der zusätzlichen Primärfarbe und Intensitäten der drei den Farbraum-definierenden Primärfarben, welche gemeinsam eine äquivalente Farbe über einen Bereich von Betriebspegeln für die zusätzliche Primärfarbe erzeugen, um einen Wert für W der vier Farb-Ausgangssignale (R', G', B', W) derart zu bestimmen, dass der Wert für W der Betriebspegel ist, welcher der kleinsten Intensität der die Farb-Eingangssignale (R, G, B) repräsentierenden Intensitäten gemäß des vorbestimmten Zusammenhangs (50R, 50G, 50B) entspricht;
   c) Transformieren des Wertes für W anhand des vorbestimmten Zusammenhangs (50R, 50G, 50B) in Modifikationswerte ($R_w$, $G_w$, $B_w$), welche auf eines oder mehrere der Farb-Eingangssignale (R, G, B) durch Subtraktion der Modifikationswerte ($R_w$, $G_w$, $B_w$) von den drei Farb-Eingangssignalen (R, G, B) anzuwenden sind, um die Farbraum-definierenden Farb-Ausgangssignale (R', G', B') zu bilden, die gemeinsam mit dem Wert für W als die Werte der vier Farb-Ausgangssignale (R', G', B', W) verwendet werden.

2. Verfahren nach Anspruch 1, wobei die drei den Farbraum-definierenden Primärfarben eine rote Primärfarbe, eine grüne Primärfarbe und eine blaue Primärfarbe sind und die zusätzliche Primärfarbe eine Farbe innerhalb des durch die rote, grüne und blaue Primärfarbe definierten Farbraums aufweist.

3. Verfahren nach Anspruch 1, wobei der Zusammenhang zwischen dem Betriebspegel der zusätzlichen Primärfarbe und den Intensitäten der drei den Farbraum-definierenden Primärfarben, welche gemeinsam die äquivalente Farbe über einen Bereich an Betriebspegeln erzeugen, in einer Nachschlagtabelle definiert ist.

4. Verfahren nach Anspruch 1, wobei der Zusammenhang zwischen dem Betriebspegel der zusätzlichen Primärfarbe und den Intensitäten der drei den Farbraum-definierenden Primärfarben, welche gemeinsam die äquivalente Farbe über einen Bereich an Betriebspegeln erzeugen, durch eine oder mehrere Funktion(en) definiert ist.

5. Verfahren nach Anspruch 1, ferner aufweisend ein Definieren eines Zusätzlichen-Primärfarben-Mischungsverhältnisses, welches ein relativer Anteil einer maximal vorgesehenen Zusätzlichen-Primärfarben-Intensität ist, und wobei der Wert W der vier Farb-Ausgangssignale ferner bestimmt wird auf Basis des Zusätzlichen-Primärfarben-Mischungsverhältnisses.

6. Verfahren nach Anspruch 1, ferner aufweisend ein Betreiben der Anzeige mit den vier Farb-Ausgangssignalen oder transformierten Werten davon, wobei die Anzeige Licht-emittierende Elemente umfasst, die Licht emittieren, das den den Farbraum-definierenden Primärfarben und der zusätzlichen Primärfarbe entspricht.

7. Verfahren nach Anspruch 6, wobei die vier Farb-Ausgangssignale oder transformierte Werte davon eingesetzt werden, um die Anzeige zu betreiben, wenn Farben auf der Anzeige angezeigt werden, die einen Wert W der vier Farb-Ausgangssignale oberhalb eines ausgewählten Schwellwertbetriebspegels der zusätzlichen Primärfarbe aufweist, und wobei die drei Farb-Eingangssignale oder transformierte Werte davon angewendet werden, um die Anzeige zu betreiben, wenn alle anderen Farben auf der Anzeige angezeigt werden, sodass die zusätzliche Primärfarbe nicht unterhalb des vorbestimmten Schwellwertes verwendet wird.

8. Verfahren nach Anspruch 7, ferner aufweisend ein Definieren eines Zusätzlichen-Primärfarben-Mischungsverhältnisses, welches ein relativer Anteil einer maximalen vorgesehenen Zusätzlichen-Primärfarben- Intensität ist, und wobei der Wert W der vier Farb-Ausgangssignale ferner bestimmt wird auf Basis des Zusätzlichen-Primärfarben-Mischungsverhältnisses.

9. Verfahren nach Anspruch 8, ferner enthaltend ein Einphasieren des Zusätzlichen-Primärfarben-Mischungsverhältnisses in eine Region oberhalb des vorbestimmten Schwellwertes.

**10.** Verfahren nach Anspruch 6, bei dem die vier Farb-Ausgangssignale oder transformierte Werte davon eingesetzt werden, um die Anzeige zu betreiben, wenn Farben auf der Anzeige oberhalb einer ausgewählten Schwellwertintensität von einer oder mehreren der drei Farbraum-definierenden Primärfarben angezeigt werden, und wobei die drei Farb-Eingangssignale oder transformierte Werte davon eingesetzt werden, um die Anzeige zu betreiben, wenn alle anderen Farben auf der Anzeige angezeigt werden, sodass die zusätzliche Primärfarbe nicht unterhalb des vorbestimmten Schwellwertes verwendet wird.

**11.** Verfahren nach Anspruch 10, ferner umfassend ein Definieren eines Zusätzlichen-Primärfarben-Mischungsverhältnisses, welches ein relativer Anteil einer maximal vorgesehenen Zusätzlichen-Primärfarben-Intensität ist, und wobei der Wert W der vier Farb-Ausgangssignale ferner bestimmt wird auf Basis des Zusätzlichen-Primärfarben-Mischungsverhältnisses.

**12.** Verfahren nach Anspruch 11, ferner enthaltend ein Einphasieren des Zusätzlichen-Primärfarben-Mischungsverhältnisses in eine Region oberhalb des vorbestimmten Schwellwertes.

**13.** Verfahren nach Anspruch 1, wobei die R', G' und B' Komponenten der vier Farb-Ausgangssignale transformiert werden, um Betriebspegel anzuzeigen.

**14.** Verfahren nach Anspruch 1, wobei jede der drei Komponenten der (R, G, B) Farb-Eingangssignale eine Intensität ist.

**15.** Verfahren nach Anspruch 1, wobei ein nicht-lineares Eingangssignal in ein lineares Signal konvertiert wird, um die (R, G, B) Farb-Eingangssignale zu erzeugen.

## Revendications

**1.** Procédé de transformation de trois signaux d'entrée de couleurs (R, G, B) correspondant à trois couleurs primaires définissant une gamme d'un afficheur en quatre signaux de sortie de couleurs (R', G', B', W) correspondant aux couleurs primaires définissant une gamme et à une couleur primaire additionnelle de l'afficheur, où la couleur primaire additionnelle a une couleur qui varie avec un niveau d'excitation, **caractérisé en ce que** comprenant :

a) la réception de trois signaux d'entrée de couleurs (R, G, B) ;
b) l'emploi des trois signaux d'entrée de couleurs (R, G, B) et d'une relation prédéterminée (50R, 50G, 50B) entre un niveau d'excitation de la couleur primaire additionnelle et des intensités des trois couleurs primaires définissant une gamme qui ensemble produisent une couleur équivalente sur une plage de niveaux d'excitation pour la couleur primaire additionnelle, pour déterminer une valeur pour W des quatre signaux de sortie de couleurs (R', G', B', W) de manière à ce que la valeur pour W soit le niveau d'excitation, qui correspond à l'intensité la plus petite des intensités représentant les signaux d'entrée de couleurs (R, G, B) en fonction de la relation prédéterminée (50R, 50G, 50B) ;
c) la transformation de la valeur pour W, par l'intermédiaire de la relation prédéterminée (50R, 50G, 50B), en des valeurs de modification ($R_w$, $G_w$, $B_w$), qui doivent être appliquées à un ou plusieurs des signaux d'entrée de couleurs (R, G, B) en soustrayant les valeurs de modification ($R_w$, $G_w$, $B_w$) des trois signaux d'entrée de couleurs (R, G, B) pour former les signaux de sortie de couleurs (R', G', B') définissant une gamme utilisés en même temps que la valeur pour W comme les valeurs des quatre signaux de sortie de couleurs (R', G', B', W).

**2.** Procédé selon la revendication 1, dans lequel les trois couleurs primaires définissant une gamme sont une couleur primaire rouge, une couleur primaire verte, et une couleur primaire bleue, et la couleur primaire additionnelle a une couleur dans la gamme définie par les couleurs primaires rouge, verte, et bleue.

**3.** Procédé selon la revendication 1, dans lequel la relation entre le niveau d'excitation de la couleur primaire additionnelle et des intensités des trois couleurs primaires définissant une gamme, qui ensemble produisent une couleur équivalente sur une plage de niveaux d'excitation, est définie dans une table de conversion.

**4.** Procédé selon la revendication 1, dans lequel la relation entre le niveau d'excitation de la couleur primaire additionnelle et des intensités des trois couleurs primaires définissant une gamme, qui ensemble produisent une couleur équivalente sur une plage de niveaux d'excitation, est définie par une ou plusieurs fonction(s).

**5.** Procédé selon la revendication 1 comprenant en outre la définition d'un rapport de mélange de couleur primaire additionnelle, qui est une fraction relative d'une intensité maximum de couleur primaire additionnelle étant prévue, et dans lequel la valeur W des quatre signaux de sortie de couleurs est en outre déterminée sur la base du rapport de mélange de couleur primaire additionnelle.

6. Procédé selon la revendication 1 comprenant en outre l'excitation de l'afficheur avec les quatre signaux de sortie de couleurs ou des valeurs transformées de ceux-ci, dans lequel l'afficheur comprend des éléments électroluminescents qui émettent une lumière correspondant aux couleurs primaires définissant une gamme et à la couleur primaire additionnelle.

7. Procédé selon la revendication 6, dans lequel les quatre signaux de sortie de couleurs ou des valeurs transformées de ceux-ci sont employés pour exciter l'afficheur lors de l'affichage de couleurs sur l'afficheur ayant une valeur W des quatre signaux de sortie de couleurs au-dessus d'un niveau d'excitation de seuil sélectionné de la couleur primaire additionnelle, et dans lequel les trois signaux d'entrée de couleurs ou des valeurs transformées de ceux-ci sont employés pour exciter l'afficheur lors de l'affichage de toutes les autres couleurs sur l'afficheur, de sorte que la couleur primaire additionnelle n'est pas utilisée au-dessous du seuil prédéterminé.

8. Procédé selon la revendication 7 comprenant en outre la définition d'un rapport de mélange de couleur primaire additionnelle, qui est une fraction relative d'une intensité maximum de couleur primaire additionnelle étant prévue, et dans lequel la valeur W des quatre signaux de sortie de couleurs est en outre déterminée sur la base du rapport de mélange de couleur primaire additionnelle.

9. Procédé selon la revendication 8 incluant en outre un phasage du rapport de mélange de couleur primaire additionnelle dans une région au-dessus du seuil prédéterminé.

10. Procédé selon la revendication 6, dans lequel les quatre signaux de sortie de couleurs ou des valeurs transformées de ceux-ci sont employés pour exciter l'afficheur lors de l'affichage de couleurs sur l'afficheur au-dessus d'une intensité de seuil sélectionnée d'une ou plusieurs des trois couleurs primaires définissant une gamme, et dans lequel les trois signaux d'entrée de couleurs ou des valeurs transformées de ceux-ci sont employés pour exciter l'afficheur lors de l'affichage de toutes les autres couleurs sur l'afficheur, de sorte que la couleur primaire additionnelle n'est pas utilisée au-dessous du seuil prédéterminé.

11. Procédé selon la revendication 10 comprenant en outre la définition d'un rapport de mélange de couleur primaire additionnelle, qui est une fraction relative d'une intensité maximum de couleur primaire additionnelle étant prévue, et dans lequel la valeur W des quatre signaux de sortie de couleurs est en outre déterminée sur la base du rapport de mélange de couleur primaire additionnelle.

12. Procédé selon la revendication 11 incluant en outre un phasage du rapport de mélange de couleur primaire additionnelle dans une région au-dessus du seuil prédéterminé.

13. Procédé selon la revendication 1, dans lequel les composantes R', G' et B' des quatre signaux de sortie de couleurs sont transformées pour afficher des niveaux d'excitation.

14. Procédé selon la revendication 1, dans lequel chacune des trois composantes des signaux d'entrée de couleurs (R, G, B) est une intensité.

15. Procédé selon la revendication 1, dans lequel un signal d'entrée non linéaire est converti en un signal linéaire pour produire les signaux d'entrée de couleurs (R, G, B).

FIG. 1

**FIG. 2**

**FIG. 3**

FIG. 4

**FIG. 5**

FIG. 6

FIG. 7A

FIG. 7B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6453067 B, Morgan
- US 5929843 A, Tanioka
- US 6885380 B, Primerano
- US 6897876 B, Murdoch
- US 20060262053 A, Lee
- US 20040222999 A, Choi
- US 20050285828 A, Inoue
- WO 2006077554 A, van Mourik
- US 20060187155 A, Chang
- US 20060256054 A, Baek
- US SN11734934 A

**Non-patent literature cited in the description**

- **LEE et al.** TFT-LCD with RGBW Color System. *SID 03 Digest,* 1212-1215
- **W. T. HARTMANN ; T.E. MADDEN.** Prediction of display colorimetry from digital video signals. *J. Imaging Tech,* 1987, vol. 13, 103-108